# EUROPEAN PATENT SPECIFICATION

(11) **EP 2 309 196 B1**
(45) Date of publication and mention of the grant of the patent: **26.12.2018**
(21) Application number: 09766441.1
(22) Date of filing: 18.06.2009
(51) Int. Cl.: F24F 7/007, F24F 7/08, F24F 11/00, F24F 12/00, F24F 11/30, F24F 110/10

(54) **VENTILATION DEVICE**
LÜFTUNGSVORRICHTUNG
DISPOSITIF DE VENTILATION

(30) Priority: 18.06.2008 JP 2008158797
(43) Date of publication of application: 13.04.2011
(73) Proprietor: Daikin Industries, Ltd., Osaka-shi, Osaka 530-8323 (JP)
(72) Inventor: TAKEUCHI, Nobumasa, Sakai-shi Osaka 591-8511 (JP); TAKAHASHI, Takashi, Sakai-shi Osaka 591-8511 (JP); MATSUGI, Yoshitaka, Sakai-shi Osaka 591-8511 (JP)
(74) Representative: Hoffmann Eitle
(86) International application number: PCT/JP2009/002772
(87) International publication number: WO 2009/153993

(56) References cited:
- EP-A1- 1 445 549
- JP-A- H11 190 542
- JP-A- 2002 039 578
- JP-A- 2007 100 983
- KR-A- 20050 055 105

## Description

### TECHNICAL FIELD

The present invention relates to ventilators for ventilating the interior of a living room, and more particularly relates to a ventilator for performing forced ventilation operation.

### BACKGROUND ART

Conventionally, ventilators for ventilating the interior of a living room have been known. Examples of such ventilators include a ventilator for performing 24-hour forced ventilation operation in which the interior of a living room is ventilated based on the recently revised Building Standards Act of Japan (see, e.g., PATENT DOCUMENT 1).

A ventilator of PATENT DOCUMENT 1 can perform ventilation operation based on an operation command from a home server serving as a controller for household equipment. A sensor for sensing substances causing sick house syndrome is connected to such a home server. When such a sensor senses substances causing sick house syndrome in a living room, the home server allows the ventilator to perform ventilation operation. When the amount of the sensed substances causing sick house syndrome in the living room is less than or equal to its threshold, the ventilation operation is stopped. A remote control electrically connected to the ventilator also enables the start and stop of ventilation operation. Such ventilation operation corresponds to optional ventilation operation (normal ventilation operation).

Furthermore, the home server determines whether or not ventilation operation has been performed at the ventilation rate defined in the above-described act. The ventilation rate denotes a value obtained by dividing the amount of effective ventilation on the ventilator by the capacity of the living room. When ventilation operation has not been performed at the defined ventilation rate, ventilation operation is forcibly performed even without sensing substances causing sick house syndrome. Such ventilation operation corresponds to forced ventilation operation (24-hour ventilation operation). As such, when a conventional ventilator performs the forced ventilation operation, this can ensure the legal ventilation rate even without performing optional ventilation operation.

By contrast, some of such ventilators are provided with a total heat exchanger. Such a total heat exchanger exchanges heat between the supply air supplied from the outdoors into a living room and the exhaust air discharged from the interior of the living room to the outdoors. The total heat exchanger allows the temperature of the supply air to be closer to the temperature of the exhaust air (the temperature of the interior of the living room), and then the supply air can be supplied into the living room. This can reduce the air-conditioning load in the living room as compared to when the outdoor air is supplied into the living room as it is without using a total heat exchanger.

Further, EP 1 445 549 A1 discloses a heat exchanger unit (5) that can appropriately inhibit freezing of a heat exchange element (11), even in cold-climate regions.

### CITATION LIST

### PATENT DOCUMENT

PATENT DOCUMENT 1: Japanese Patent Publication No. 2005-337647

### SUMMARY OF THE INVENTION

### TECHNICAL PROBLEM

However, no consideration is given to the amount of power consumption of an air-blowing fan during forced ventilation operation of a conventional ventilator. This causes less energy conservation of such a ventilator.

The present invention has been made in view of the foregoing point, and it is an object of the present invention to provide a ventilator including a total heat exchanger and reducing the amount of power consumption during forced ventilation operation.

### SOLUTION TO THE PROBLEM

A first aspect of the invention is directed to a ventilator for performing ventilation operation to ventilate air in a living room. The ventilator includes: an air supply fan (20) for supplying outdoor air, as supply air, into the living room; an exhaust fan (21) for discharging the air in the living room, as exhaust air, to outdoors; and a total heat exchanger (22) having a supply air channel through which the supply air flows, and an exhaust air channel through which the exhaust air flows.

The ventilation operation includes optional ventilation operation for optionally performing ventilation, and forced ventilation operation for forcibly ventilating the living room in an amount of ventilation less than an amount of ventilation in the optional ventilation operation and greater than or equal to a predetermined required amount of ventilation. The ventilator further includes a controller (2) for, upon receipt of a stop signal for stopping the optional ventilation operation, terminating the optional ventilation operation and starting the forced ventilation operation, and upon receipt of a start signal for starting the optional ventilation operation, terminating the forced ventilation operation and starting the optional ventilation operation. In addition, the controller (2) enables intermittent control for intermittently operating both of the fans (20, 21) during the forced ventilation operation.

In the first aspect of the invention, the air supply fan (20) and the exhaust fan (21) are intermittently operated, thereby allowing the amount of ventilation of the interior of the living room during the forced ventilation operation to be less than that during normal ventilation operation without using a ventilation amount adjuster, such as an inverter.

A second aspect of the invention is the ventilator according to the first aspect of the invention, wherein airflow rates of both of the fans (20, 21) are variable. Furthermore, the controller (2) is switchable between a first operation in which both of the fans (20, 21) are continuously operated, and a second operation in which both of the fans (20, 21) are intermittently operated at a higher fan rotation speed than in the first operation such that an amount of ventilation per unit time is substantially equal to the amount of ventilation per unit time in the first operation, thereby performing the forced ventilation operation.

In the second aspect of the invention, both of the fans (20, 21) can be continuously or intermittently operated without changing the amount of ventilation per unit time during the forced ventilation operation. This allows a change in the heat exchange efficiency of the total heat exchanger (22). Specifically, if the amount of ventilation in intermittent operation of the fans (20, 21) is equal to that in continuous operation thereof, the flow rates of the supply air and the exhaust air flowing through the total heat exchanger (22) are higher in the intermittent operation. Therefore, the heat exchange efficiency of the total heat exchanger (22) can be reduced by the degree to which the flow rates of the supply air and the exhaust air are higher.

When the amount of ventilation per unit time is set at a required amount of ventilation of the living room (e.g., the amount of ventilation specified in the laws of Japan), the amount of power consumption of both of the fans (20, 21) during the forced ventilation operation can be reduced to a necessary minimum.

A third aspect of the invention is the ventilator according to the second aspect of the invention further including: an air supply side temperature sensing unit (3) for sensing a temperature T1 at a supply air entrance to the total heat exchanger (22); and an exhaust side temperature sensing unit (4) for sensing a temperature T2 at an exhaust air entrance to the total heat exchanger (22). When a value sensed by the air supply side temperature sensing unit (3) is greater than or equal to a predetermined value Tset and less than a value sensed by the exhaust side temperature sensing unit (4), the controller (2) selects the second operation, and when the value sensed by the air supply side temperature sensing unit (3) is greater than or equal to the predetermined value Tset and greater than or equal to the value sensed by the exhaust side temperature sensing unit (4), the controller (2) selects the first operation.

In the third aspect of the invention, any one of the first operation and the second operation can be performed, as the forced ventilation operation, based on the values sensed by the air supply side temperature sensing unit (3) and the exhaust side temperature sensing unit (4). Here, the predetermined value is a value for determining the outdoor season. For example, when the predetermined temperature is set at 19°C, and the temperature at the supply air entrance is higher than or equal to 19°C, the outdoor season is determined to be summer.

When the outdoor season is determined to be summer, and the temperature T1 at the supply air entrance is lower than the temperature T2 at the exhaust air entrance, the supply air should be blown into the living room with minimization of increase in the temperature of the supply air in the total heat exchanger (22). Therefore, in this case, the fans (20, 21) are intermittently operated. This reduces the heat exchange efficiency of the total heat exchanger (22) as described above, thereby blowing the supply air into the living room with minimization of increase in the temperature of the supply air in the total heat exchanger (22).

Conversely, when the temperature T1 at the supply air entrance is higher than or equal to the temperature T2 at the exhaust air entrance, the temperature of the supply air should be decreased as much as possible using the total heat exchanger (22), and then, the air should be blown into the living room. Therefore, in this case, the fans (20, 21) are continuously operated. This increases the heat exchange efficiency of the total heat exchanger (22) as described above, thereby decreasing the supply air temperature as much as possible using the total heat exchanger (22), and then blowing the air into the living room.

A fourth aspect of the invention is the ventilator according to the second aspect of the invention further including: an air supply side temperature sensing unit (3) for sensing a temperature T1 at a supply air entrance to the total heat exchanger (22); and an exhaust side temperature sensing unit (4) for sensing a temperature T2 at an exhaust air entrance to the total heat exchanger (22). When a value sensed by the air supply side temperature sensing unit (3) is less than a predetermined value Tset and less than or equal to a value sensed by the exhaust side temperature sensing unit (4), the controller (2) selects the first operation, and when the value sensed by the air supply side temperature sensing unit (3) is less than the predetermined value Tset and greater than the value sensed by the exhaust side temperature sensing unit (4), the controller (2) selects the second operation.

In the fourth aspect of the invention, any one of the first operation and the second operation can be performed, as the forced ventilation operation, based on the values sensed by the air supply side temperature sensing unit (3) and the exhaust side temperature sensing unit (4). Here, the predetermined value is a value for determining the outdoor season. For example, when the predetermined value is set at 19°C, and the temperature at the supply air entrance is lower than 19°C, the outdoor season is determined to be winter.

When the outdoor season is determined to be winter, and contrary to summer, the temperature T1 at the supply air entrance is lower than or equal to the temperature T2 at the exhaust air entrance, the supply air temperature should be increased as much as possible using the total heat exchanger (22), and then, the air should be blown into the living room. Therefore, in this case, the fans (20, 21) are continuously operated. This increases the heat exchange efficiency of the total heat exchanger (22) as described above, thereby increasing the supply air temperature as much as possible using the total heat exchanger (22), and then blowing the air into the living room.

When the temperature T1 at the supply air entrance is higher than the temperature T2 at the exhaust air entrance, the supply air should be blown into the living room with minimization of decrease in the supply air temperature in the total heat exchanger (22). Therefore, in this case, the fans (20, 21) are intermittently operated. This reduces the heat exchange efficiency of the total heat exchanger (22) as described above, thereby blowing the supply air into the living room with minimization of decrease in the supply air temperature in the total heat exchanger (22).

A fifth aspect of the invention is the ventilator according to the second aspect of the invention further including: a cooling mechanism (5) for cooling an interior of the living room so that a temperature of the interior of the living room is equal to a set cooling temperature. When a temperature T1 sensed at a supply air entrance by the air supply side temperature sensing unit (3) is higher than or equal to the set cooling temperature, the controller (2) selects the first operation, and when the temperature T1 at the supply air entrance is lower than the set cooling temperature, the controller (2) selects the second operation.

In the fifth aspect of the invention, the outdoor season is determined based on the set cooling temperature of the cooling mechanism (5) placed in the living room and the value sensed by the air supply side temperature sensing unit (3), and thus, any one of the first operation and the second operation can be performed as the forced ventilation operation.

A sixth aspect of the invention is the ventilator according to the second aspect of the invention further including: a heating mechanism (6) for heating an interior of the living room so that a temperature of the interior of the living room is equal to a set heating temperature. When a temperature T1 of the supply air sensed at a supply air entrance by the air supply side temperature sensing unit (3) is lower than or equal to the set heating temperature, the controller (2) selects the first operation, and when the temperature T1 at the supply air entrance is higher than the set heating temperature, the controller (2) selects the second operation.

In the sixth aspect of the invention, the outdoor season is determined based on the set heating temperature of the heating mechanism (6) placed in the living room and the value sensed by the air supply side temperature sensing unit (3), and thus, any one of the first operation and the second operation can be performed as the forced ventilation operation.

A seventh aspect of the invention is the ventilator according to any one of the first through sixth aspects of the invention, wherein the controller (2) can change the ratio of a driving time of each of the fans (20, 21) to an intermittent operation time of the fan (20, 21) during the forced ventilation operation and the ratio of a stop time of the fan to the intermittent operation time.

In the seventh aspect of the invention, the amount of ventilation of the living room in the forced ventilation operation can be adjustably set. Specifically, when the ratio of the driving time of the fans (20, 21) to the intermittent operation time thereof is increased, this can increase the amount of ventilation of the living room. On the other hand, when the ratio of the stop time to the intermittent operation time thereof is increased, this can reduce the amount of ventilation of the living room.

An eighth aspect of the invention is the ventilator according to the fifth aspect of the invention, wherein the cooling mechanism (5) and the controller (2) are electrically connected together such that when operation of the cooling mechanism (5) stops, the stop signal is delivered from the cooling mechanism (5) to the controller (2), and when operation of the cooling mechanism (5) starts, the start signal is delivered from the cooling mechanism (5) to the controller (2).

In the eighth aspect of the invention, operation of the ventilator can be linked to operation of the cooling mechanism (5).

A ninth aspect of the invention is the ventilator according to the sixth aspect of the invention, wherein the heating mechanism (6) and the controller (2) are electrically connected together such that when operation of the heating mechanism (6) stops, the stop signal is delivered from the heating mechanism (6) to the controller (2), and when operation of the heating mechanism (6) starts, the start signal is delivered from the heating mechanism (6) to the controller (2).

In the ninth aspect of the invention, operation of the ventilator can be linked to operation of the heating mechanism (6).

A tenth aspect of the invention is the ventilator according to the first through ninth aspects of the invention further including: a user-operable operating unit (34). The operating unit (34) and the controller (2) are electrically connected together such that the stop signal and the start signal are delivered through the operating unit (34) to the controller (2).

In the tenth aspect of the invention, the ventilator can be operated using the user-operable operating unit (34).

### ADVANTAGES OF THE INVENTION

According to the present invention, the air supply fan (20) and the exhaust fan (21) are intermittently operated, thereby allowing the amount of ventilation of the interior of the living room during the forced ventilation operation to be less than that during normal ventilation operation without using a ventilation amount adjuster, such as an inverter. This can reduce the amount of power consumption of the ventilator during the forced ventilation operation to a smaller amount than in a conventional art.

According to the second aspect of the invention, both of the fans (20, 21) can be continuously or intermittently operated during the forced ventilation operation without changing the amount of ventilation per unit time. This enables a change in the heat exchange efficiency of the total heat exchanger (22), thereby controlling the temperature of the air supplied into the living room to a maximum extent.

According to the third and fourth aspects of the invention, any one of the first operation and the second operation can be performed, as the forced ventilation operation, based on the values sensed by the air supply side temperature sensing unit (3) and the exhaust side temperature sensing unit (4). Therefore, the temperature of the supply air supplied into the living room can be controlled to a maximum extent.

According to the fifth aspect of the invention, the outdoor season is determined based on the set cooling temperature of the cooling mechanism (5) placed in the living room and the value sensed by the air supply side temperature sensing unit (3), and thus, any one of the first operation and the second operation can be performed as the forced ventilation operation. Therefore, operation of the ventilator can be linked to the cooling mechanism (5).

According to the sixth aspect of the invention, the outdoor season is determined based on the set heating temperature of the heating mechanism (6) placed in the living room and the value sensed by the air supply side temperature sensing unit (3), and thus, any one of the first operation and the second operation can be performed as the forced ventilation operation. Therefore, operation of the ventilator can be linked to the heating mechanism (6).

According to the seventh aspect of the invention, the amount of ventilation of the living room in forced ventilation operation can be adjustably set. Thus, the amount of ventilation of the living room can be set based on, e.g., the reference defined in the revised Building Standards Act of Japan. This enables setting of an economical amount of ventilation for the ventilator, thereby appropriately reducing the amount of operation power during the forced ventilation operation.

According to the eighth aspect of the invention, operation of the ventilator can be linked to operation of the cooling mechanism (5). Therefore, after the operation of the cooling mechanism (5) has stopped, forced ventilation operation can be performed.

According to the ninth aspect of the invention, operation of the ventilator can be linked to operation of the heating mechanism (6). Therefore, after the operation of the heating mechanism (6) has stopped, forced ventilation operation can be performed.

According to the tenth aspect of the invention, the ventilator can be operated using the user-operable operating unit (34). Therefore, after the user has stopped the ventilator, and has moved out of the living room, forced ventilation operation can be performed.

### BRIEF DESCRIPTION OF THE DRAWINGS

[FIG. 1] FIG. 1 is an outline view of a ventilator according to an embodiment.
[FIG. 2] FIG. 2 is a layout of the ventilator according to the embodiment.
[FIG. 3] FIG. 3 is a correspondence table between set position numbers and ventilation cycles of the ventilator according to the embodiment.
[FIG. 4] FIG. 4 is a layout of a ventilator and an air conditioner according to a second variation of the embodiment.
[FIG. 5] FIG. 5 is a graph illustrating the relationship between the airflow rate of each fan and the driving time of the fan when the fan is set to continuous operation or intermittent operation in forced ventilation operation of the ventilator according to the embodiment.
[FIG. 6] FIG. 6 is a flow chart of forced ventilation operation of a ventilator according to a first variation of the embodiment.
[FIG. 7] FIG. 7 is a flow chart of forced ventilation operation of the ventilator according to the second variation of the embodiment.

### DESCRIPTION OF EMBODIMENTS

An embodiment of the present invention will be described hereinafter in detail with reference to the drawings.

### <Embodiment>

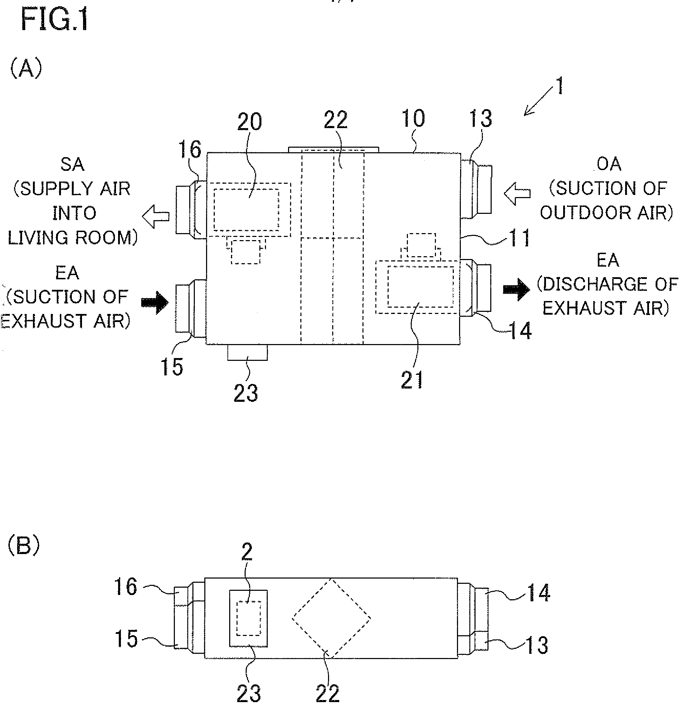

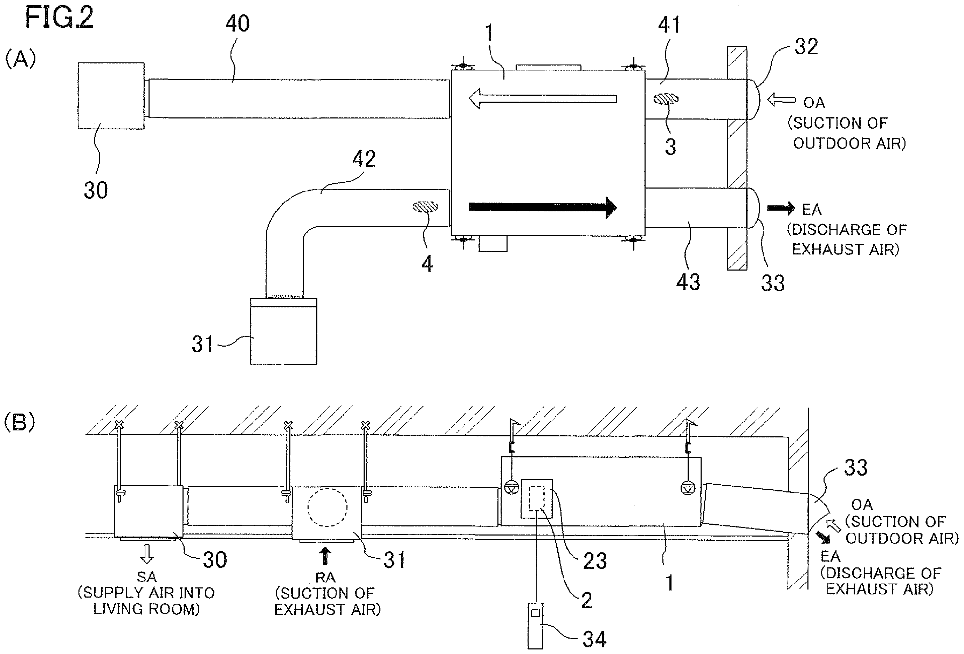

As illustrated in FIGS. 1 and 2, a ventilator (1) of this embodiment is a total heat exchanger unit shaped like a ceiling-mounted duct. Unless otherwise specified, the terms "right," "left," "top," "bottom," "front," and "back" used in the following description all refer to the state illustrated in FIG. 1.

As illustrated in FIG. 1, the total heat exchanger unit (1) includes a horizontally oriented casing (10) having a flat rectangular parallelepiped shape. A right side plate (11) of the casing (10) includes an outdoor air suction duct connector (13) and an exhaust air duct connector (14). The outdoor air suction duct connector (13) is placed toward the back of the right side plate (11), and the exhaust air duct connector (14) is placed toward the front thereof.

By contrast, a left side plate (12) of the casing (10) includes an indoor air suction duct connector (15) and a supply air duct connector (16). The indoor air suction duct connector (15) is placed toward the front of the left side plate (12), and the supply air duct connector (16) is placed toward the back thereof.

Although not shown, the interior space of the casing (10) is partitioned into an air supply side passage and an exhaust side passage. The air supply side passage communicates with an opening of the outdoor air suction duct connector (13) and an opening of the supply air duct connector (16). The exhaust side passage communicates with an opening of the indoor air suction duct connector (15) and an opening of the exhaust air duct connector (14). The air supply side passage includes an air supply fan (20), and the exhaust side passage includes an exhaust fan (21).

These fans (20, 21) each include a fan body which is a so-called sirocco fan, and a fan motor for driving the fan body. The fan motor includes a rotation speed selector mechanism for gradually changing the rotation speed of the fan motor, and the rotation speed selector mechanism can adjust the rotation speed of the fan. In this embodiment, the rotation speed of the fan motor can be changed in three levels.

A total heat exchanger (22) is placed astride the air supply side passage and the exhaust side passage in the interior space of the casing (10). The total heat exchanger (22) is formed in the shape of a quadrangular prism having square end faces, and includes flat plates (not shown) and corrugated plates (not shown) which are alternately arranged along the length of the total heat exchanger (22). The total heat exchanger (22) is configured such that air supply channels through which outdoor air is passed, and exhaust channels through which the air in a living room is passed are alternately formed with each flat plate interposed between the corresponding air supply channel and the corresponding exhaust channel, and forms a crossflow heat exchanger in which the direction of extension of the air supply channels and the direction of extension of the exhaust channels are orthogonal to each other. The air supply channels communicate with the air supply side passage, and the exhaust channels communicate with the exhaust side passage.

The flat plates of the total heat exchanger (22) are made of a permeable material, such as paper. In the total heat exchanger (22), heat and moisture transfer from one of the outdoor air flowing through the air supply channels and the air in the living room flowing through the exhaust channels to the other. Specifically, the total heat exchanger (22) is configured such that enthalpy is exchanged between the moist air flows.

A control box (23) is attached to a front side plate of the casing (10). A controller (2) is contained in the control box (23), and is a control unit for controlling operation of the air supply fan (20) and operation of the exhaust fan (21). Examples of the operation controlled by the controller (2) include forced ventilation operation which is one of the features of the present invention. The details of the forced ventilation operation will be described below.

As illustrated in FIG. 2, the total heat exchanger unit (1) is placed on the back face of the ceiling of the living room. The ceiling includes an air supply grille (30) having an air supply port, and an exhaust grille (31) having an exhaust port. One end of a first air supply duct (40) is connected to the air supply grille (30), and the supply air duct connector (16) of the total heat exchanger unit (1) is connected to the other end of the first air supply duct (40). One end of a first exhaust duct (42) is connected to the exhaust grille (31), and the other end thereof is connected to the indoor air suction duct connector (15) of the total heat exchanger unit (1).

A wall separating the living room from the outdoors includes a round air supply hood (32) and a round exhaust hood (33). The round hoods (32, 33) each have a vent. One end of a second air supply duct (41) is connected to the round air supply hood (32), and the other end thereof is connected to the outdoor air suction duct connector (13) of the total heat exchanger unit (1). One end of a second exhaust duct (43) is connected to the round exhaust hood (33), and the other end thereof is connected to the exhaust air duct connector (14) of the total heat exchanger unit (1).

A remote control (34) which is an operating unit is placed in the living room. The remote control (34) is used by the user to operate the total heat exchanger unit (1), and is connected by electrical wiring to the controller (2) of the control box (23).

The remote control (34) delivers an operation signal for starting and stopping operation of the total heat exchanger unit (1) and a rotation speed setting signal for setting the rotation speeds of the fans to the controller (2) through the electrical wiring. The remote control (34) also delivers a ventilation cycle signal for changing the amount of ventilation during forced ventilation operation described below to the controller (2).

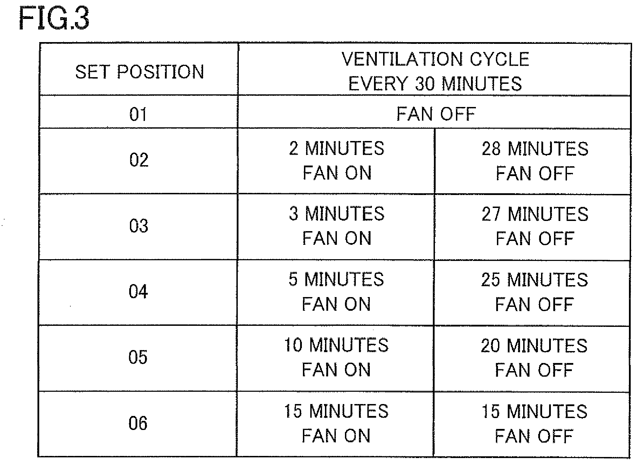

The forced ventilation operation may be referred to as so-called 24-hour ventilation operation. The forced ventilation operation is performed by intermittently operating the air supply fan (20) and the exhaust fan (21), and the amount of ventilation during this forced ventilation operation can be changed in five levels as illustrated in FIG. 3. Specifically, when the user enters any one of the set position numbers illustrated in FIG. 3 into the remote control (34), the ventilation cycle signal corresponding to the entered set position number is delivered to the controller (2), thereby changing the amount of ventilation during the forced ventilation operation.

A supply air temperature sensor (air supply side temperature sensing unit) (3) is disposed in the second air supply duct (41) to sense the temperature of the outdoor air flowing into the total heat exchanger unit (1), and an exhaust air temperature sensor (exhaust side temperature sensing unit) (4) is disposed in the first exhaust duct (42) to sense the temperature of the air in the living room flowing into the total heat exchanger unit (1).

Specifically, ventilation operation of the total heat exchanger unit (1) includes optional ventilation operation for optionally performing ventilation, and forced ventilation operation for forcibly ventilating the living room in an amount of ventilation less than that during the optional ventilation operation and greater than or equal to a predetermined required amount of ventilation. The optional ventilation operation is so-called normal ventilation operation which is usually performed. The forced ventilation operation is so-called 24-hour ventilation operation.

Upon receipt of a stop signal for stopping the optional ventilation operation, the controller (2) terminates the optional ventilation operation, and starts the forced ventilation operation. Upon receipt of a start signal for starting the optional ventilation operation, the controller (2) terminates the forced ventilation operation, and starts the optional ventilation operation. The controller (2) is capable of intermittent control for intermittently operating both of the fans (20, 21) during the forced ventilation operation.

### -Operational Behavior-

The user selects any one of three set airflow rate levels by using the remote control (34). Thereafter, when the user turns an operation switch of the remote control (34) on, the rotation speed setting signal corresponding to the selected airflow rate, and the operation signal for starting operation of the total heat exchanger unit (1) are fed from the remote control (34) into the controller (2), and the air supply fan (20) and the exhaust fan (21) start their operation at the selected airflow rate. Then, outdoor air is sucked through the round air supply hood (32), the second air supply duct (41), and the air supply channels of the total heat exchanger (22) into the air supply fan (20) in the casing (10). By contrast, the air in the living room is sucked through the exhaust grille (31), the first exhaust duct (42), and the exhaust channels of the total heat exchanger (22) into the exhaust fan (21) in the casing (10). In the total heat exchanger (22), heat and moisture transfer from one of the air flowing through the air supply channels and the air flowing through the exhaust channels to the other, and thus, the temperature and humidity of the air flowing through the air supply channels approach the temperature and humidity, respectively, of the air flowing through the exhaust channels.

The outdoor air sucked into the air supply fan (20) is blown out through the air supply fan (20), and flows into the first air supply duct (40). By contrast, the air in the living room sucked into the exhaust fan (21) is blown out through the exhaust fan (21), and flows into the second exhaust duct (43).

The outdoor air having flowed into the first air supply duct (40) passes through the first air supply duct (40), and then, is blown out, as supply air, through the air supply grille (30) into the living room. By contrast, the air in the living room having flowed into the second exhaust duct (43) passes through the second exhaust duct (43), and then, is discharged, as exhaust air, through the round exhaust hood (33) to the outdoors. As such, operation performed based on an operation command from the remote control (34) is optional ventilation operation, and this operation provides ventilation of the air in the living room.

When the user turns the operation switch of the remote control (34) off, the optional ventilation operation terminates. Thereafter, forced ventilation operation is performed based on the ventilation cycle signal fed through the remote control (34) into the controller (2) without complete stop of the air supply fan (20) and the exhaust fan (21). Specifically, the air supply fan (20) and the exhaust fan (21) are intermittently operated. In this embodiment, the rotation speeds of the fans (20, 21) are set at the lowest one of the three rotation speed levels.

For example, when the ventilation cycle signal corresponding to the set position number 02 in FIG. 3 has been fed, the air supply fan (20) and the exhaust fan (21) operate only for two minutes, and then, stop for 28 minutes. Thereafter, the fans (20, 21) again operate only for two minutes, and then, stop for 28 minutes. This cycle is repeated until the operation switch of the remote control (34) is turned on. As such, after termination of the optional ventilation operation, operation in which air-blowing operation of the air supply fan (20) and the exhaust fan (21) is intermittently performed is forced ventilation operation, and this operation provides ventilation of the air in the living room even subsequent to termination of the optional ventilation operation.

When the user turns the operation switch of the remote control (34) on, the forced ventilation operation terminates, and optional ventilation operation is started.

### -Advantages of Embodiment-

In this embodiment, unlike the conventional art, the air supply fan (20) and the exhaust fan (21) can be intermittently operated during forced ventilation operation. This can reduce the amount of ventilation during forced ventilation operation as compared to when these fans (20, 21) are continuously operated, thereby reducing the amount of power consumption.

In the forced ventilation operation, when these fans (20, 21) are intermittently operated, the heat exchange efficiency of the total heat exchanger (22) can be reduced to a lower level than when these fans (20, 21) are continuously operated. Thus, while the temperature of the supply air is controlled so that it is not too close to the temperature of the air in the living room, the supply air can be supplied into the living room.

According to this embodiment, the amount of ventilation in the living room in forced ventilation operation can be adjustably set by changing the set position number of the remote control (34). Thus, the amount of ventilation in the living room can be set based on, e.g., the reference defined in the revised Building Standards Act of Japan. This enables setting of an economical amount of ventilation for the ventilator, thereby appropriately reducing the amount of operation power during the forced ventilation operation.

### -First Variation of Embodiment-

Unlike the embodiment, in the first variation of the embodiment, the controller (2) can change operation of the fans (20, 21) between continuous operation and intermittent operation, based on the temperatures sensed by the supply air temperature sensor (3) and the exhaust air temperature sensor (4), and the fan motors of the fans (20, 21) each include a rotation speed selector mechanism for the continuous operation.

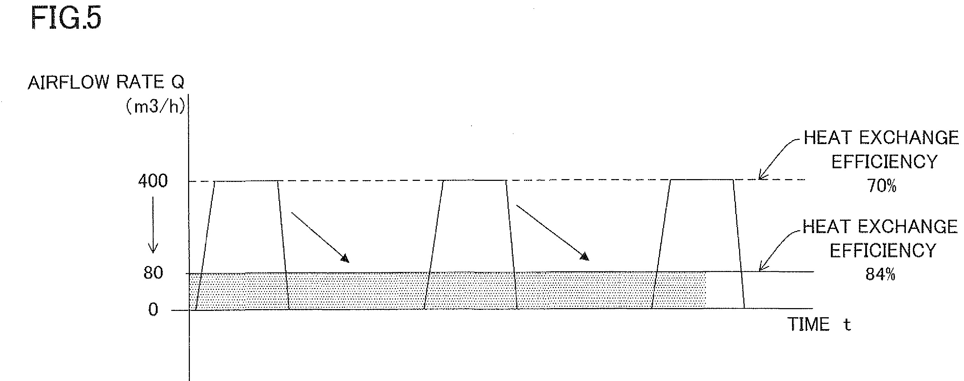

FIG. 5 is a graph illustrating the relationship between the airflow rate of each fan (20, 21) and the driving time when the fan is set to any one of the continuous operation and the intermittent operation. The airflow rate during the intermittent operation is greater than that during the continuous operation. However, the operating time in the intermittent operation is set shorter than that in the continuous operation, and thus, the amounts of ventilation during both of the continuous operation and the intermittent operation are set at the same value. The set amounts of ventilation are equal to the amount of ventilation calculated from the floor area of the living room, the area in which predetermined building materials are used, etc., based on the laws of Japan.

When the fans (20, 21) are set to the continuous operation, the rotation speed selector mechanism allows the fans (20, 21) to rotate at a lower rotation speed than the lowest rotation speed during the optional ventilation operation. In the first variation, as illustrated in FIG. 5, the fans (20, 21) continuously operate with an airflow rate of 80 m³/h. The heat exchange efficiency of the total heat exchanger (22) relative to this airflow rate is 84%.

By contrast, when the fans (20, 21) are set to the intermittent operation, the rotation speeds of the fan motors of the fans (20, 21) are changed by the rotation speed selector mechanism, and thus, the fans (20, 21) intermittently operate with an airflow rate of 400 m³/h. The heat exchange efficiency of the total heat exchanger (22) relative to this airflow rate is 70%.

As described above, the heat exchange efficiency in the intermittent operation with a high fan airflow rate can be lower. Therefore, in the total heat exchanger configured such that the outdoor air having exchanged heat with the air in the living room is blown out into the living room, when the temperature of the air blown out into the living room is not to be close to the temperature of the air in the living room, the intermittent operation is performed. On the other hand, when the temperature of the air blown out into the living room is to be close to the temperature of the air in the living room, the continuous operation is performed.

Specifically, the controller (2) allows selection between a first operation in which both of the fans (20, 21) are continuously operated, and a second operation in which both of the fans (20, 21) are intermittently operated at a higher fan rotation speed than that during the first operation such that the amount of ventilation per unit time is substantially equal to that in the first operation, thereby providing forced ventilation operation.

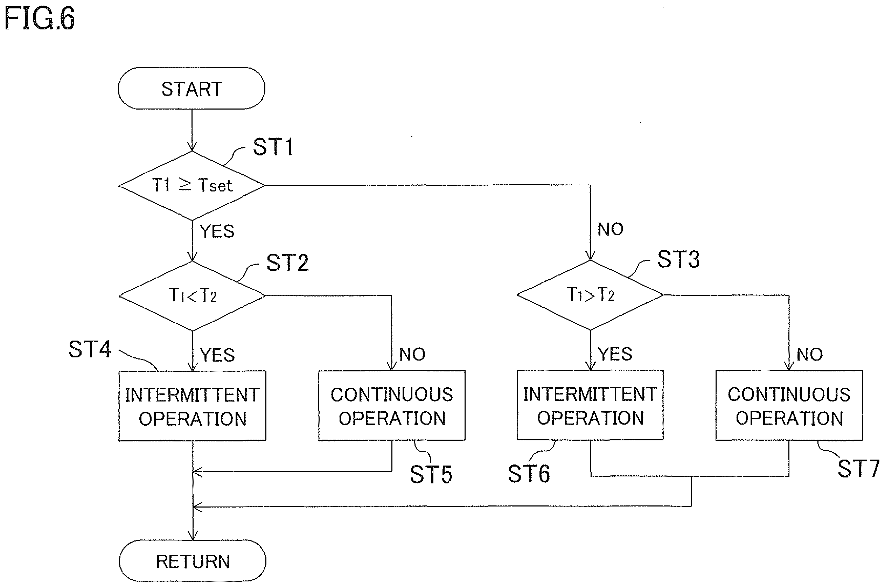

FIG. 6 is a flow chart of the forced ventilation operation according to the first variation. When the user turns the operation switch of the remote control (34) off, the optional ventilation operation terminates, and simultaneously, the forced ventilation operation starts. Then, in step ST1 in FIG. 6, a determination is made whether or not the temperature T1 sensed by the supply air temperature sensor (3) is greater than or equal to a predetermined set temperature Tset. In the first variation, the set temperature Tset is set at 19°C.

In step ST1, the outdoor season is determined. In this step ST1, the sensed temperature T1 is the temperature at the air supply side entrance to the total heat exchanger (22), and thus, is substantially equal to the outdoor temperature. When the sensed temperature T1 is greater than or equal to 19°C, the outdoor season is determined to be summer. When the sensed temperature T1 is less than 19°C, the outdoor season is determined to be winter. If the requirement in step ST1 is satisfied, the outdoor season is determined to be summer, and this process proceeds to step ST2. If not, the outdoor season is determined to be winter, and this process proceeds to step ST3.

In step ST2, a determination is made whether or not the temperature T1 sensed by the supply air temperature sensor (3) is lower than the temperature T2 sensed by the exhaust air temperature sensor (4). If the requirement in step ST2 is satisfied, this process proceeds to step ST4, thereby allowing the fans (20, 21) to perform intermittent operation. By contrast, if the requirement in step ST2 is not satisfied, this process proceeds to step ST5, thereby allowing the fans (20, 21) to perform continuous operation. The sensed temperature T2 is the temperature at the exhaust side entrance to the total heat exchanger (22), and thus, is substantially equal to the temperature of the interior of the living room.

In step ST2, when, in summer, the outdoor temperature (T1) is lower than the temperature (T2) of the interior of the living room, the outdoor air should be blown into the living room with minimization of increase in the outdoor air temperature in the total heat exchanger (22). Therefore, in this case, the fans (20, 21) are intermittently operated (step ST4). This reduces the heat exchange efficiency of the total heat exchanger (22) as described above, thereby blowing the outdoor air into the living room with minimization of increase in the outdoor air temperature in the total heat exchanger (22).

Conversely, when the outdoor temperature (T1) is higher than or equal to the temperature (T2) of the interior of the living room, the outdoor air temperature should be decreased as much as possible using the total heat exchanger (22), and then, the air should be blown into the living room. Therefore, in this case, the fans (20, 21) are continuously operated (step ST5). This increases the heat exchange efficiency of the total heat exchanger (22) as described above, thereby decreasing the outdoor air temperature as much as possible using the total heat exchanger (22), and then blowing the air into the living room.

By contrast, in step ST3, a determination is made whether or not the temperature T1 sensed by the supply air temperature sensor (3) is higher than the temperature T2 sensed by the exhaust air temperature sensor (4). Then, if the requirement in step ST3 is satisfied, this process proceeds to step ST6, and the fans (20, 21) are intermittently operated. On the other hand, if the requirement in step ST3 is not satisfied, this process proceeds to step ST7, and the fans (20, 21) are continuously operated.

In step ST3, when, in winter, contrary to summer, the outdoor temperature (T1) is lower than the temperature (T2) of the interior of the living room, the outdoor air temperature should be increased as much as possible using the total heat exchanger (22), and then, the air should be blown into the living room. Therefore, in this case, the fans (20, 21) are continuously operated (step ST7). This increases the heat exchange efficiency of the total heat exchanger (22) as described above, thereby increasing the outdoor air temperature as much as possible using the total heat exchanger (22), and then blowing the air into the living room.

When the outdoor air temperature is higher than the temperature of the interior of the living room, the outdoor air should be blown into the living room with minimization of decrease in the outdoor air temperature in the total heat exchanger (22). Therefore, in this case, the fans (20, 21) are intermittently operated (step ST6). This reduces the heat exchange efficiency of the total heat exchanger (22) as described above, thereby blowing the outdoor air into the living room with minimization of decrease in the outdoor air temperature in the total heat exchanger (22).

As such, in the forced ventilation operation, the fans (20, 21) are intermittently or continuously operated based on the outdoor temperature (T1) and the temperature (T2) of the interior of the living room, thereby controlling the temperature of the air supplied into the living room.

### -Second Variation of Embodiment-

Unlike the embodiment, in the second variation of the embodiment, operation of the total heat exchanger unit (1) is linked to an air conditioner (5, 6) which is placed in a living room and which forms a cooling mechanism and a heating mechanism.

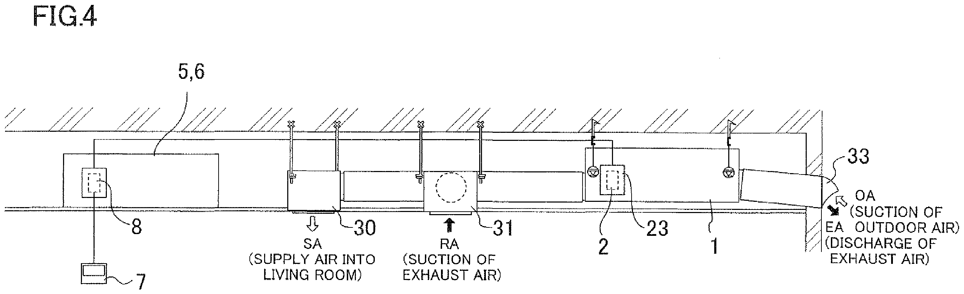

Operation of the air conditioner (5, 6) illustrated in FIG. 4 can be changed between cooling operation and heating operation. An air conditioner remote control (7) is provided in the living room to allow the user to operate this air conditioner (5, 6). The air conditioner remote control (7) is connected to an air conditioner control board (8) for controlling operation of the air conditioner (5, 6) by electrical wiring. The air conditioner control board (8) and the controller (2) for the total heat exchanger unit are connected together by electrical wiring.

The air conditioner remote control (7) delivers an operation signal for starting or stopping operation of the air conditioner (5, 6), an operation setting signal for setting the operation mode to a cooling operation mode or a heating operation mode, and a set temperature signal for setting the set temperature in each operation mode, to the air conditioner control board (8) via the electrical wiring. These signals are delivered through the air conditioner control board (8) also to the controller (2) for the total heat exchanger unit.

In the second variation of the embodiment, when the user selects cooling operation or heating operation using the air conditioner remote control (7), and then turns the operation switch of the air conditioner remote control (7) on, an operation setting signal corresponding to the selected operation mode, and an operation signal for starting operation of the air conditioner (5, 6) are fed to the air conditioner control board (8) and the controller (2) for the total heat exchanger unit. Thus, the air conditioner (5, 6) starts operating in the selected operation mode, and simultaneously, the total heat exchanger unit (1) starts optional ventilation operation. When the operation switch of the air conditioner remote control (7) is turned off, operation of the air conditioner (5, 6) stops, and simultaneously, operation of the total heat exchanger unit (1) is changed from optional ventilation operation to forced ventilation operation, thereby continuing ventilation operation.

As such, operation of the total heat exchanger unit (1) is linked to the air conditioner (5, 6).

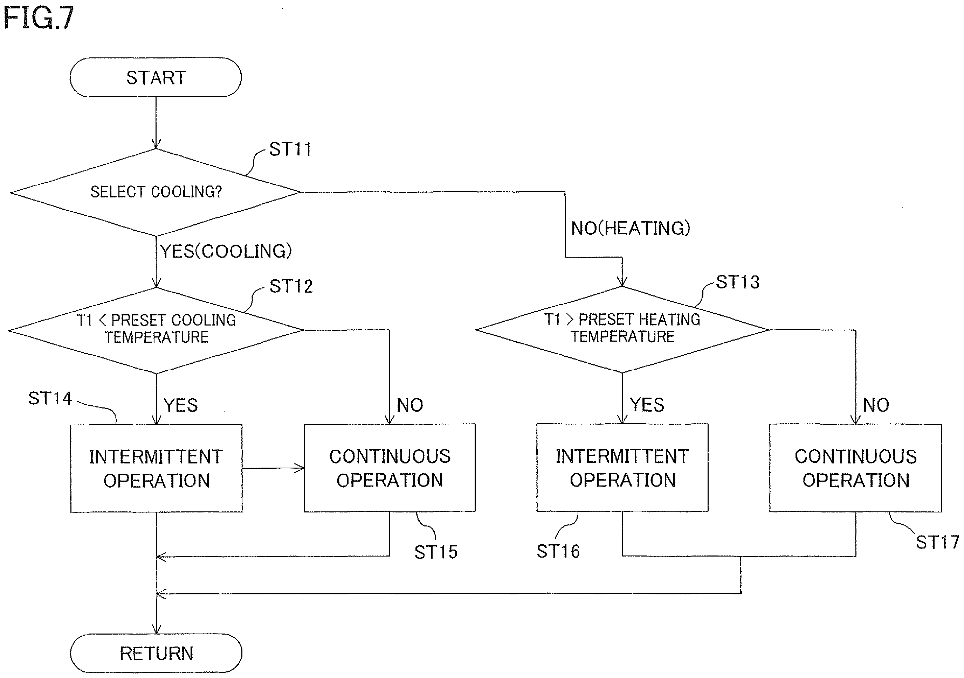

FIG. 7 is a flow chart of forced ventilation operation according to the second variation. When the user turns the operation switch of the air conditioner remote control (7) off, forced ventilation operation starts as described above. Then, in step ST11 in FIG. 7, a determination is made whether or not the operation mode of the air conditioner (5, 6) corresponds to cooling operation. If the operation mode is determined to correspond to cooling operation, this process proceeds to step ST12. If not, the operation mode is determined to correspond to heating operation, and this process proceeds to step ST13. As such, unlike the first variation, a determination is made whether the outdoor season is summer or winter, based on the setting of the operation mode using the air conditioner remote control (7). If the operation mode of the air conditioner (5, 6) corresponds to cooling operation, the outdoor season is determined to be summer. If the operation mode of the air conditioner (5, 6) corresponds to heating operation, the outdoor season is determined to be winter.

In step ST12, unlike the first variation, a determination is made whether or not the temperature T1 sensed by the supply air temperature sensor (3) is lower than the set cooling temperature of the air conditioner (5, 6). When the outdoor temperature (T1) is lower than the set cooling temperature, the outdoor air should be blown into the living room with minimization of increase in the outdoor air temperature in the total heat exchanger (22). Therefore, in this case, the fans (20, 21) are intermittently operated. This reduces the heat exchange efficiency of the total heat exchanger (22) as described above, thereby blowing the outdoor air into the living room with minimization of increase in the outdoor air temperature in the total heat exchanger (22).

Conversely, when the outdoor temperature (T1) is higher than or equal to the set cooling temperature, the outdoor air temperature should be decreased as much as possible using the total heat exchanger (22), and then the air should be blown into the living room. Therefore, in this case, the fans (20, 21) are continuously operated. This increases the heat exchange efficiency of the total heat exchanger (22) as described above, thereby decreasing the outdoor air temperature as much as possible using the total heat exchanger (22), and then blowing the air into the living room.

By contrast, in step ST13, a determination is made whether or not the temperature T1 sensed by the supply air temperature sensor (3) is higher than the set heating temperature of the air conditioner (5, 6). When the outdoor temperature (T1) is higher than the set heating temperature, the outdoor air should be blown into the living room with minimization of decrease in the outdoor air temperature in the total heat exchanger (22). Therefore, in this case, the fans (20, 21) are intermittently operated. This reduces the heat exchange efficiency of the total heat exchanger (22) as described above, thereby blowing the outdoor air into the living room with minimization of decrease in the outdoor air temperature using the total heat exchanger (22).

Conversely, when the outdoor temperature (T1) is lower than or equal to the set heating temperature, the outdoor air temperature should be increased as much as possible using the total heat exchanger (22), and then, the air should be blown into the living room. Therefore, in this case, the fans (20, 21) are continuously operated. This increases the heat exchange efficiency of the total heat exchanger (22) as described above, thereby increasing the outdoor air temperature as much as possible using the total heat exchanger (22), and then blowing the air into the living room.

As such, in the forced ventilation operation, the fans (20, 21) are intermittently or continuously operated based on the outdoor temperature (T1) and the set temperature of the air conditioner (5, 6), thereby controlling the temperature of the air supplied into the living room.

### <Other Embodiments>

The embodiment may be configured as follows.

In this embodiment, the ventilator forms a total heat exchanger unit (1) shaped like a ceiling-mounted duct. The ventilator of the present invention is not limited to the total heat exchanger unit (1), and may be, for example, a total heat exchanger unit shaped like a ceiling-mounted cassette. The cassette-shaped unit includes an outlet and an inlet in the bottom surface of the casing (10). In this case, the interior of the living room can be ventilated without providing the air supply grille (30) and the exhaust grille (31).

In this embodiment, the air supply fan (20) and the exhaust fan (21) are intermittently operated at the same time. The present invention is not limited to this operating manner. The fans (20, 21) may be operated for different durations. In this case, if the driving time of the air supply fan (20) is longer, the living room can have a positive air pressure. This can prevent the air in a living room adjacent to the living room having a positive air pressure from flowing into the living room having a positive air pressure when the living room having a positive air pressure is separated from the living room adjacent to the living room having a positive air pressure by a louver shutter, etc. If the driving time of the exhaust fan (21) is longer, the living room can have a negative air pressure. This can prevent the air in a living room adjacent to the living room having a negative air pressure from flowing into the living room having a negative air pressure when the living room having a negative air pressure is separated from the living room adjacent to the living room having a negative air pressure by a louver shutter, etc.

The foregoing embodiments have been set forth merely for purposes of preferred examples in nature, and are not intended to limit the scope, applications, and use of the invention.

### INDUSTRIAL APPLICABILITY

As described above, the present invention is useful for a ventilator for ventilating the interior of a living room.

### DESCRIPTION OF REFERENCE CHARACTERS

1 Total Heat Exchanger Unit (Ventilator)
2 Controller (Control Means)
3 Supply Air Temperature Sensor (Air Supply Side Temperature Sensing Unit)
4 Exhaust Air Temperature Sensor (Exhaust Side Temperature Sensing Unit)
10 Casing
20 Air Supply Fan
21 Exhaust Fan
22 Total Heat Exchanger
34 Remote Control (Operating Unit)

## Claims

1. A ventilator for performing ventilation operation to ventilate air in a living room, the ventilator comprising:
an air supply fan (20) for supplying outdoor air, as supply air, into the living room;
an exhaust fan (21) for discharging the air in the living room, as exhaust air, to outdoors; and
a total heat exchanger (22) having a supply air channel through which the supply air flows, and an exhaust air channel through which the exhaust air flows,
wherein the ventilation operation includes optional ventilation operation for optionally performing ventilation, and forced ventilation operation for forcibly ventilating the living room in an amount of ventilation less than an amount of ventilation in the optional ventilation operation and greater than or equal to a predetermined required amount of ventilation,
the ventilator further includes a controller (2) for, upon receipt of a stop signal for stopping the optional ventilation operation, terminating the optional ventilation operation and starting the forced ventilation operation, and upon receipt of a start signal for starting the optional ventilation operation, terminating the forced ventilation operation and starting the optional ventilation operation, and
the controller (2) enables intermittent control for intermittently operating both of the fans (20, 21) during the forced ventilation operation,
wherein
airflow rates of both of the fans (20, 21) are variable, and
the controller (2) is switchable between a first operation in which both of the fans (20, 21) are continuously operated, and a second operation, **characterized in that** during the second operation both of the fans (20, 21) are intermittently operated by the controller (2) at a higher fan rotation speed than in the first operation such that an amount of ventilation per unit time is substantially equal to an amount of ventilation per unit time in the first operation, thereby performing the forced ventilation operation.

2. The ventilator of claim 1 further comprising:
an air supply side temperature sensing unit (3) for sensing a temperature T1 at a supply air entrance to the total heat exchanger (22); and
an exhaust side temperature sensing unit (4) for sensing a temperature T2 at an exhaust air entrance to the total heat exchanger (22),
wherein when a value sensed by the air supply side temperature sensing unit (3) is greater than or equal to a predetermined value Tset and less than a value sensed by the exhaust side temperature sensing unit (4), the controller (2) selects the second operation, and when the value sensed by the air supply side temperature sensing unit (3) is greater than or equal to the predetermined value Tset and greater than or equal to the value sensed by the exhaust side temperature sensing unit (4), the controller (2) selects the first operation.

3. The ventilator of claim 1 further comprising:
an air supply side temperature sensing unit (3) for sensing a temperature T1 at a supply air entrance to the total heat exchanger (22); and
an exhaust side temperature sensing unit (4) for sensing a temperature T2 at an exhaust air entrance to the total heat exchanger (22),
wherein when a value sensed by the air supply side temperature sensing unit (3) is less than a predetermined value Tset and less than or equal to a value sensed by the exhaust side temperature sensing unit (4), the controller (2) selects the first operation, and when the value sensed by the air supply side temperature sensing unit (3) is less than the predetermined value Tset and greater than the value sensed by the exhaust side temperature sensing unit (4), the controller (2) selects the second operation.

4. The ventilator of claim 1 further comprising:
a cooling mechanism (5) for cooling an interior of the living room so that a temperature of the interior of the living room is equal to a set cooling temperature,
wherein when a temperature T1 sensed at a supply air entrance by the air supply side temperature sensing unit (3) is higher than or equal to the set cooling temperature, the controller (2) selects the first operation, and when the temperature T1 at the supply air entrance is lower than the set cooling temperature, the controller (2) selects the second operation.

5. The ventilator of claim 1 further comprising:
a heating mechanism (6) for heating an interior of the living room so that a temperature of the interior of the living room is equal to a set heating temperature,
wherein when a temperature T1 of the supply air sensed at a supply air entrance by the air supply side temperature sensing unit (3) is lower than or equal to the set heating temperature, the controller (2) selects the first operation, and when the temperature T1 at the supply air entrance is higher than the set heating temperature, the controller (2) selects the second operation.

6. The ventilator of any one of claims 1-5, wherein the controller (2) can change the ratio of a driving time of each of the fans (20, 21) to an intermittent operation time of the fan (20, 21) during the forced ventilation operation and the ratio of a stop time of the fan to the intermittent operation time.

7. The ventilator of claim 4, wherein
the cooling mechanism (5) and the controller (2) are electrically connected together such that when operation of the cooling mechanism (5) stops, the stop signal is delivered from the cooling mechanism (5) to the controller (2), and when operation of the cooling mechanism (5) starts, the start signal is delivered from the cooling mechanism (5) to the controller (2).

8. The ventilator of claim 5, wherein the heating mechanism (6) and the controller (2) are electrically connected together such that when operation of the heating mechanism (6) stops, the stop signal is delivered from the heating mechanism (6) to the controller (2), and when operation of the heating mechanism (6) starts, the start signal is delivered from the heating mechanism (6) to the controller (2).

9. The ventilator of any one of claims 1-8 further comprising:
a user-operable operating unit (34),
wherein the operating unit (34) and the controller (2) are electrically connected together such that the stop signal and the start signal are delivered through the operating unit (34) to the controller (2).

## Patentansprüche

1. Lüfter zum Durchführen eines Belüftungsbetriebs zum Belüften von Luft in einem Wohnzimmer, wobei der Lüfter umfasst:
einen Luftzufuhrventilator (20) zum Zuführen von Außenluft, als Zuluft, in das Wohnzimmer;
einen Abluftventilator (21) zum Abführen der Luft im Wohnzimmer, als Abluft, nach außen; und
einen Gesamtwärmetauscher (22), der einen Zuluftkanal, durch den die Zuluft strömt, und einen Abluftkanal, durch den die Abluft strömt, aufweist,
wobei der Belüftungsbetrieb einen optionalen Belüftungsbetrieb zum optionalen Durchführen einer Belüftung und einen Zwangsbelüftungsbetrieb zum zwangsweisen Belüften des Wohnzimmers mit einer Belüftungsmenge einschließt, die geringer ist, als eine Belüftungsmenge bei dem optionalen Belüftungsbetrieb, und größer als oder gleich einer vorbestimmten erforderlichen Belüftungsmenge ist,
der Lüfter weiter eine Steuerung (2) einschließt, um bei Empfang eines Stoppsignals zum Anhalten des optionalen Belüftungsbetriebs den optionalen Belüftungsbetrieb zu beenden und den Zwangsbelüftungsbetrieb zu starten, und bei Empfang eines Startsignals zum Starten des optionalen Belüftungsbetriebs den Zwangsbelüftungsbetrieb zu beenden und den optionalen Belüftungsbetrieb zu starten, und
die Steuerung (2) ein intermittierendes Steuern zum intermittierenden Betrieb beider Ventilatoren (20, 21) während des Zwangsbelüftungsbetriebs ermöglicht,
wobei
die Luftströme beider Ventilatoren (20, 21) variabel sind und
die Steuerung (2) zwischen einem ersten Betrieb, bei dem beide Ventilatoren (20, 21) kontinuierlich betrieben werden, und einem zweiten Betrieb umschaltbar ist, **dadurch gekennzeichnet, dass** während des zweiten Betriebs beide Ventilatoren (20, 21) von der Steuerung (2) mit einer höheren Ventilatordrehzahl als im ersten Betrieb intermittierend betrieben werden, sodass eine Belüftungsmenge pro Zeiteinheit im Wesentlichen gleich einer Belüftungsmenge pro Zeiteinheit in dem ersten Betrieb ist, wodurch der Zwangsbelüftungsbetrieb durchgeführt wird.

2. Lüfter nach Anspruch 1, weiter umfassend:
eine luftzufuhrseitige Temperaturerfassungseinheit (3) zum Erfassen einer Temperatur T1 an einem Zulufteingang zum Gesamtwärmetauscher (22); und
eine auslassseitige Temperaturerfassungseinheit (4) zum Erfassen einer Temperatur T2 an einem Ablufteingang zum Gesamtwärmetauscher (22),
wobei, wenn ein von der luftzufuhrseitigen Temperaturerfassungseinheit (3) erfasster Wert größer als oder gleich einem vorbestimmten Wert Tset und geringer als ein von der auslassseitigen Temperaturerfassungseinheit (4) erfasster Wert ist, die Steuerung (2) den zweiten Betrieb auswählt, und wenn der von der luftzufuhrseitigen Temperaturerfassungseinheit (3) erfasste Wert größer als oder gleich dem vorbestimmten Wert Tset und größer als oder gleich dem von der auslassseitigen Temperaturerfassungseinheit (4) erfassten Wert ist, die Steuerung (2) den ersten Betrieb auswählt.

3. Lüfter nach Anspruch 1, weiter umfassend:
eine luftzufuhrseitige Temperaturerfassungseinheit (3) zum Erfassen einer Temperatur T1 an einem Zulufteingang zum Gesamtwärmetauscher (22); und
eine auslassseitige Temperaturerfassungseinheit (4) zum Erfassen einer Temperatur T2 an einem Ablufteingang zum Gesamtwärmetauscher (22),
wobei, wenn ein von der luftzufuhrseitigen Temperaturerfassungseinheit (3) erfasster Wert geringer als ein vorbestimmter Wert Tset und geringer als oder gleich einem von der auslassseitigen Temperaturerfassungseinheit (4) erfassten Wert ist, die Steuerung (2) den ersten Betrieb auswählt, und wenn der von der luftzufuhrseitigen Temperaturerfassungseinheit (3) erfasste Wert geringer als der vorbestimmte Wert Tset und größer als der von der auslassseitigen Temperaturerfassungseinheit (4) erfasste Wert ist, die Steuerung (2) den zweiten Betrieb auswählt.

4. Lüfter nach Anspruch 1, weiter umfassend:
einen Kühlmechanismus (5) zum Kühlen eines Innenbereichs des Wohnzimmers, sodass eine Temperatur des Innenbereichs des Wohnzimmers gleich einer eingestellten Kühltemperatur ist,
wobei, wenn eine Temperatur T1, die an einem Zulufteingang von der luftzufuhrseitigen Temperaturerfassungseinheit (3) erfasst wird, höher als oder gleich der eingestellten Kühltemperatur ist, die Steuerung (2) den ersten Betrieb auswählt, und wenn die Temperatur T1 am Zulufteingang niedriger als die eingestellte Kühltemperatur ist, die Steuerung (2) den zweiten Betrieb auswählt.

5. Lüfter nach Anspruch 1, weiter umfassend:
einen Erwärmungsmechanismus (6) zum Erwärmen eines Innenbereichs des Wohnzimmers, sodass eine Temperatur des Innenbereichs des Wohnzimmers gleich einer eingestellten Erwärmungstemperatur ist,
wobei, wenn eine Temperatur T1 der Zuluft, die an einem Zulufteingang von der luftzufuhrseitigen Temperaturerfassungseinheit (3) erfasst wird, niedriger als oder gleich der eingestellten Erwärmungstemperatur ist, die Steuerung (2) den ersten Betrieb auswählt und wenn die Temperatur T1 am Zulufteingang höher als die eingestellte Erwärmungstemperatur ist, die Steuerung (2) den zweiten Betrieb auswählt.

6. Lüfter nach einem der Ansprüche 1 bis 5, wobei
die Steuerung (2) das Verhältnis einer Antriebszeit jedes der Ventilatoren (20, 21) zu einer intermittierenden Betriebszeit des Ventilators (20, 21) während des Zwangsbelüftungsbetriebs und das Verhältnis einer Stoppzeit des Ventilators zur intermittierenden Betriebszeit ändern kann.

7. Lüfter nach Anspruch 4, wobei
der Kühlmechanismus (5) und die Steuerung (2) elektrisch miteinander verbunden sind, sodass, wenn der Betrieb des Kühlmechanismus (5) anhält, das Stoppsignal vom Kühlmechanismus (5) an die Steuerung (2) geliefert wird, und wenn der Betrieb des Kühlmechanismus (5) startet, das Startsignal vom Kühlmechanismus (5) an die Steuerung (2) geliefert wird.

8. Lüfter nach Anspruch 5, wobei der Erwärmungsmechanismus (6) und die Steuerung (2) elektrisch miteinander verbunden sind, sodass, wenn der Betrieb des Erwärmungsmechanismus (6) anhält, das Stoppsignal vom Erwärmungsmechanismus (6) an die Steuerung (2) geliefert wird, und wenn der Betrieb des Erwärmungsmechanismus (6) startet, das Startsignal vom Erwärmungsmechanismus (6) an die Steuerung (2) geliefert wird.

9. Lüfter nach einem der Ansprüche 1 bis 8, weiter umfassend:
eine vom Benutzer betriebsbereite Betriebseinheit (34);
wobei die Betriebseinheit (34) und die Steuerung (2) elektrisch miteinander verbunden sind, sodass das Stoppsignal und das Startsignal durch die Betriebseinheit (34) an die Steuerung (2) geliefert werden.

## Revendications

1. Ventilateur destiné à assurer un fonctionnement en ventilation pour ventiler une pièce de séjour avec de l'air, le ventilateur comprenant :
un ventilateur d'amenée d'air (20) destiné à amener de l'air extérieur, en tant qu'air d'amenée, dans la pièce de séjour ;
un ventilateur d'évacuation (21) destiné à évacuer l'air de la pièce de séjour, en tant qu'air d'évacuation, vers l'extérieur ; et
un échangeur de chaleur totale (22) possédant un canal d'air d'amenée par lequel s'écoule l'air d'amenée, et un canal d'air d'évacuation par lequel s'écoule l'air d'évacuation,
dans lequel le fonctionnement en ventilation comporte un fonctionnement en ventilation facultative pour assurer une ventilation de façon facultative, et un fonctionnement en ventilation forcée pour ventiler la pièce de séjour de façon forcée dans une quantité de ventilation inférieure à une quantité de ventilation dans le fonctionnement en ventilation facultative et supérieure ou égale à une quantité de ventilation nécessaire prédéterminée,
le ventilateur comporte en outre un dispositif de commande (2) destiné, lors de la réception d'un signal d'arrêt pour arrêter le fonctionnement en ventilation facultative, à mettre fin au fonctionnement en ventilation facultative et à démarrer le fonctionnement en ventilation forcée, et lors de la réception d'un signal de démarrage pour démarrer le fonctionnement en ventilation facultative, à mettre fin au fonctionnement en ventilation forcée et à démarrer le fonctionnement en ventilation facultative, et
le dispositif de commande (2) permet une commande intermittente pour actionner par intermittence les deux ventilateurs (20, 21) pendant le fonctionnement en ventilation forcée,
dans lequel
les débits d'air des deux ventilateurs (20, 21) sont variables, et
le dispositif de commande (2) est commutable entre un premier fonctionnement dans lequel les deux ventilateurs (20, 21) sont actionnés en continu, et un second fonctionnement, **caractérisé en ce que** pendant le second fonctionnement, les deux ventilateurs (20, 21) sont actionnés par intermittence par le dispositif de commande (2) à une vitesse de rotation de ventilateur plus élevée que lors du premier fonctionnement de sorte qu'une quantité de ventilation par temps unitaire est sensiblement égale à une quantité de ventilation par temps unitaire dans le premier fonctionnement, en assurant ainsi le fonctionnement en ventilation forcée.

2. Ventilateur selon la revendication 1 comprenant en outre :
une unité de détection de température côté amenée d'air (3) destinée à détecter une température T1 au niveau d'une entrée d'air d'amenée vers l'échangeur de chaleur totale (22) ; et
une unité de détection de température côté évacuation (4) destinée à détecter une température T2 au niveau d'une entrée d'air d'évacuation vers l'échangeur de chaleur totale (22),
dans lequel lorsqu'une valeur détectée par l'unité de détection de température côté amenée d'air (3) est supérieure ou égale à une valeur prédéterminée Tset et inférieure à une valeur détectée par l'unité de détection de température côté évacuation (4), le dispositif de commande (2) sélectionne le second fonctionnement, et lorsque la valeur détectée par l'unité de détection de température côté amenée d'air (3) est supérieure ou égale à la valeur prédéterminée Tset et supérieure ou égale à la valeur détectée par l'unité de détection de température côté évacuation (4), le dispositif de commande (2) sélectionne le premier fonctionnement.

3. Ventilateur selon la revendication 1 comprenant en outre :
une unité de détection de température côté amenée d'air (3) destinée à détecter une température T1 au niveau d'une entrée d'air d'amenée vers l'échangeur de chaleur totale (22) ; et
une unité de détection de température côté évacuation (4) destinée à détecter une température T2 au niveau d'une entrée d'air d'évacuation vers l'échangeur de chaleur totale (22),
dans lequel lorsqu'une valeur détectée par l'unité de détection de température côté amenée d'air (3) est inférieure à une valeur prédéterminée Tset et inférieure ou égale à une valeur détectée par l'unité de détection de température côté évacuation (4), le dispositif de commande (2) sélectionne le premier fonctionnement, et lorsque la valeur détectée par l'unité de détection de température côté amenée d'air (3) est inférieure à la valeur prédéterminée Tset et supérieure à la valeur détectée par l'unité de détection de température côté évacuation (4), le dispositif de commande (2) sélectionne le second fonctionnement.

4. Ventilateur selon la revendication 1 comprenant en outre :
un mécanisme de refroidissement (5) destiné à refroidir un intérieur de la pièce de séjour de sorte qu'une température de l'intérieur de la pièce de séjour soit égale à une température de refroidissement de consigne,
dans lequel lorsqu'une température T1 détectée au niveau d'une entrée d'air d'amenée par l'unité de détection de température côté amenée d'air (3) est supérieure ou égale à la température de refroidissement de consigne, le dispositif de commande (2) sélectionne le premier fonctionnement, et lorsque la température T1 au niveau de l'entrée d'air d'amenée est inférieure à la température de refroidissement de consigne, le dispositif de commande (2) sélectionne le second fonctionnement.

5. Ventilateur selon la revendication 1 comprenant en outre :
un mécanisme de chauffage (6) destiné à chauffer un intérieur de la pièce de séjour de sorte qu'une température de l'intérieur de la pièce de séjour soit égale à une température de chauffage de consigne,
dans lequel lorsqu'une température T1 de l'air d'amenée détectée au niveau d'une entrée d'air d'amenée par l'unité de détection de température côté amenée d'air (3) est inférieure ou égale à la température de chauffage de consigne, le dispositif de commande (2) sélectionne le premier fonctionnement, et lorsque la température T1 au niveau de l'entrée d'air d'amenée est supérieure à la température de chauffage de consigne, le dispositif de commande (2) sélectionne le second fonctionnement.

6. Ventilateur selon l'une quelconque des revendications 1 à 5, dans lequel
le dispositif de commande (2) peut modifier le rapport d'un temps d'entraînement de chacun des ventilateurs (20, 21) à un temps de fonctionnement par intermittence du ventilateur (20, 21) pendant le fonctionnement en ventilation forcée et le rapport d'un temps d'arrêt du ventilateur au temps de fonctionnement par intermittence.

7. Ventilateur selon la revendication 4, dans lequel
le mécanisme de refroidissement (5) et le dispositif de commande (2) sont reliés électriquement l'un à l'autre de sorte que lorsque le fonctionnement du mécanisme de refroidissement (5) s'arrête, le signal d'arrêt est délivré depuis le mécanisme de refroidissement (5) vers le dispositif de commande (2), et lorsque le fonctionnement du mécanisme de refroidissement (5) démarre, le signal de démarrage est délivré depuis le mécanisme de refroidissement (5) vers le dispositif de commande (2).

8. Ventilateur selon la revendication 5, dans lequel le mécanisme de chauffage (6) et le dispositif de commande (2) sont reliés électriquement l'un à l'autre de sorte que lorsque le fonctionnement du mécanisme de chauffage (6) s'arrête, le signal d'arrêt est délivré depuis le mécanisme de chauffage (6) vers le dispositif de commande (2), et lorsque le fonctionnement du mécanisme de chauffage (6) démarre, le signal de démarrage est délivré depuis le mécanisme de chauffage (6) vers le dispositif de commande (2).

9. Ventilateur selon l'une quelconque des revendications 1 à 8 comprenant en outre :
une unité de fonctionnement actionnable par utilisateur (34),
dans lequel l'unité de fonctionnement (34) et le dispositif de commande (2) sont reliés électriquement l'un à l'autre de sorte que le signal d'arrêt et le signal de démarrage sont délivrés au travers de l'unité de fonctionnement (34) vers le dispositif de commande (2).
